# FASCICULE DE BREVET EUROPEEN

(11) **EP 4 575 756 B1**
(45) Date de publication et mention de la délivrance du brevet: **11.11.2026**
(21) Numéro de dépôt: 24218298.8
(22) Date de dépôt: 09.12.2024
(51) Int. Cl.: G06F 7/487

(54) **ARBRE DE RÉDUCTION PRODUIT POUR LA REPRÉSENTATION MACHINE**
PRODUKTREDUKTIONSWELLE FÜR MASCHINENDARSTELLUNG
PRODUCT REDUCTION TREE FOR MACHINE REPRESENTATION

(30) Priorité: 19.12.2023 FR 2314464
(43) Date de publication de la demande: 25.06.2025
(73) Titulaire: Orange, 92130 Issy-les-Moulineaux (FR)
(72) Inventeur: LARUE, Guillaume, 92326 CHATILLON CEDEX (FR); DUFRENE, Louis Adrien, 92326 CHATILLON CEDEX (FR); LAMPIN, Quentin, 92326 CHATILLON CEDEX (FR)
(74) Mandataire: Plasseraud IP

(56) Documents cités:
- "Advances in Decision Analysis", 1 January 2007, CAMBRIDGE UNIVERSITY PRESS, Cambridge, ISBN: 978-0-521-86368-1, article CLEMEN ROBERT T ET AL: "Aggregating Probability Distributions", pages: 154 - 176, XP093189213
- JOHNSON MARK: "Creating probabilistic 3D models of lithofluid facies using machine-learning algorithms", 3 September 2014 (2014-09-03), pages 1 - 56, XP093189221, Retrieved from the Internet <URL:https://web.science.mq.edu.au/~mjohnson/papers/Johnson14-04NB-talk.pdf> DOI: 10.1190/INT-2019-0249.1

## Description

### Domaine technique

La présente divulgation relève du domaine de la programmation informatique dans le contexte de calculs de produits de nombres en virgule flottante par une machine. En particulier, la présente divulgation trouve des applications dans le domaine du numérique ou encore des télécommunications, pour la reconstruction de signaux et/ou de données à partir d'une pluralité de distributions.

### Technique antérieure

Dans de nombreuses applications numériques et industrielles, la reconstruction d'une information requiert l'agrégation d'une pluralité de données provenant de plusieurs sources, exprimées sous différentes formes et/ou contenant des corrélations ou des redondances. Typiquement, une telle pluralité de données peut s'exprimer sous la forme de distributions de probabilités reflétant plusieurs observations ou occurrences liées à un même paramètre ou une même variable, plus généralement une même information. L'agrégation de ces différentes distributions de probabilités permet alors de reconstituer l'information sous une forme agrégée.

Par exemple, dans le domaine des télécommunications, des méthodes de démodulation pour un système de modulation à décalage de code cyclique (ou CCSK, en anglais « *Cyclic Code Shift Keying* »)*,* en particulier un système dit CCSK-CP-OFDM, peuvent s'appuyer sur des distributions de probabilités relatives reflétant des écarts entre les différents symboles d'une trame. Pour une paire de symboles considérée, de telles distributions s'apparentent alors à une pluralité d'estimations d'une distribution relative d'un symbole par rapport à l'autre. L'agrégation de ces différentes estimations permet alors d'estimer une telle unique distribution relative.

Dans un autre exemple, dans le domaine des codes de correction d'erreur, l'agrégation d'informations redondantes peut également avoir lieu lors d'une phase de décodage. Par exemple, un code par répétitions consiste à transmettre différents messages répétant plusieurs fois chaque bit d'information transmis afin de prendre en compte d'éventuelles erreurs de transmission. L'estimation de la valeur d'un bit d'information peut alors passer par l'agrégation des distributions de probabilité associées aux différentes répétitions de ce bit, transmises dans les différents messages.

Afin de reconstituer une information à partir d'une pluralité de distributions, il est commun d'agréger les différentes distributions sous la forme d'un calcul de produit terme à terme des différentes distributions. Un tel produit est ensuite normalisé afin de ramener l'information sous la forme d'une distribution agrégée unique. Par exemple, la pluralité de distributions de probabilités décrivant une même variable peut être agrégée sous la forme d'un produit de probabilités puis normalisée de sorte à obtenir une unique distribution de probabilités dont la somme des termes reste égale à un.

Cependant, dans de nombreux cas, le produit d'une telle pluralité de distributions conduit à multiplier des nombres flottants de plus en plus petits : typiquement, les produits terme à terme successifs de probabilités comprises entre 0 et 1 peuvent rapidement atteindre des valeurs de l'ordre de 10⁻¹⁰, 10⁻²⁰, 10⁻³⁰ ou moins. Un tel produit pose alors un problème de représentation en machine des nombres.

En effet, les nombres flottants (ou nombres à virgule flottante) peuvent être représentés en machine selon plusieurs formats normalisés. Par exemple, la norme IEEE 754 (définie par l'organisme *Institute of Electrical and Electronics Engineers*) définit plusieurs formats de représentation d'un nombre flottant, dont le format codé sur 32 bits (simple précision). Dans un tel format de 32 bits, tout nombre flottant représentable peut être encodé par 1 bit de signe, 8 bits d'exposants et 23 bits de mantisse. Un tel encodage permet alors de représenter des valeurs absolues comprises entre environ 1,17×10⁻³⁸ et 3,4×10⁺³⁸.

Néanmoins, il arrive fréquemment que les résultats des produits successifs de faibles valeurs soient en deçà de la valeur minimale représentable (e.g., 1,17×10⁻³⁸ pour le format simple précision). Il se produit alors un phénomène dit de soupassement arithmétique (ou en anglais, « *arithmetic underflow* »)*,* défini par une incapacité à représenter un nombre en machine, considéré comme plus proche de zéro que n'importe quel autre nombre représentable dans ce format. Dans ce cas, le résultat est arrondi à zéro. L'information résultant d'un tel produit (par exemple au niveau d'un décodeur recevant des transmissions et reconstruisant le signal correspondant) devient alors erronée ou altérée.

### Résumé

La présente divulgation vient améliorer la situation.

Il est proposé un calculateur configuré pour agréger une pluralité de distributions initiales en une distribution agrégée, lesdites distributions initiales étant associées à des vecteurs de valeurs, chaque valeur étant un nombre réel flottant et étant représentable par le calculateur selon un format de représentation prédéfini dans lequel les valeurs représentables selon ce format sont comprises entre une valeur minimale et une valeur maximale représentables,
dans lequel, pour l'agrégation des distributions initiales, le calculateur est configuré pour mettre en œuvre, itérativement :
   - un regroupement de distributions pour former une pluralité de sous-ensembles de distributions, et
   - des opérations de produits, terme à terme, sur les sous-ensembles de distributions, lesdits produits résultant en au moins une distribution intermédiaire, suivie par une opération de normalisation de chaque distribution intermédiaire,
jusqu'à obtenir la distribution agrégée,
dans lequel chaque regroupement de distributions est mis en œuvre de sorte que les opérations de produits sur les sous-ensembles de distributions conduisent à des valeurs résultantes strictement supérieures à la valeur minimale représentable.

Par conséquent, le calculateur proposé permet avantageusement d'agréger une diversité de données observables prenant la forme d'une pluralité de distributions initiales en une information agrégée. Une telle agrégation est particulièrement pertinente lorsque les distributions initiales reflètent différentes occurrences ou fonctions décrivant une même variable, un même paramètre ou une même information. En particulier, le calculateur proposé permet, quel que soit le format de représentation employé, l'implémentation en machine et la représentation des données d'une telle agrégation, qui peut impliquer un grand nombre de données à agréger, notamment lorsque plusieurs milliers de distributions initiales sont agrégées et/ou lorsque les distributions initiales comprennent plusieurs centaines ou milliers de valeurs par exemple.

Le calculateur proposé est particulièrement avantageux lorsque l'agrégation de distributions initiales implique des opérations de produits terme à terme sur la pluralité de distributions initiales. En effet, lorsqu'un grand nombre de valeurs est agrégé par des opérations de produits et notamment selon l'ordre de grandeur de telles valeurs, un phénomène de soupassement arithmétique (ou en anglais *« arithmetic underflow* ») peut avoir lieu, lié à une problématique de représentation d'un flottant en machine. Typiquement, lorsque des opérations de produits successifs sont mises en œuvre sur des valeurs comprises entre 0 et 1, les valeurs résultantes peuvent être de l'ordre de 10⁻¹⁰, 10⁻²⁰, 10⁻³⁰ voire moins, ou plus généralement, être au voisinage d'une valeur minimale représentable en machine. Lorsqu'une valeur résultante est en deçà de la valeur minimale représentable pour un format de représentation donné, une telle valeur résultante ne peut alors pas être représentée en machine et est approximée par zéro. Une telle approximation introduit alors un biais de calcul et fausse le résultat final. Dans un tel contexte, le calculateur proposé met en œuvre une agrégation sous forme itérative par regroupement et traitement de sous-ensembles de données. Une telle agrégation itérative permet alors de tenir compte des contraintes machine liées à la représentation de la donnée, et ainsi d'améliorer la précision des calculs.

Par un calculateur, il est entendu un moyen informatique, typiquement un ordinateur, comprenant au moins une unité de traitement (e.g., un processeur, une ou plusieurs unités fonctionnelles...) et apte à mettre en œuvre au moins un traitement ou une opération de calcul sur une pluralité de données initiales (e.g., des distributions initiales). En particulier, le calculateur est apte à représenter les valeurs réelles sous la forme de flottants (ou nombres à virgule flottante) selon un format de représentation prédéfini. Dans un tel format de représentation prédéfini, le calculateur peut alors représenter en machine des flottants (considérés en valeur absolue) compris entre une valeur (réelle) minimale représentable et une valeur (réelle) maximale représentable.

Par une pluralité de distributions initiales, il est entendu une forme de pluralité de données observables, issues par exemple de mesures, calculs, relevés, estimations, approximations d'une entité d'entrée. La pluralité de distributions initiales peut par exemple traduire une pluralité d'observables ou d'occurrences d'un phénomène, d'un paramètre, d'une occurrence, d'un événement ou d'une information. De telles distributions initiales peuvent alors refléter différents aspects ou corrélations d'une information. Par exemple, de telles distributions initiales peuvent refléter différentes transmissions d'une information via différentes sous-porteuses en fréquence, ou encore via différents canaux de transmission dans un système de communication. Par une distribution initiale, il peut être par exemple fait référence à une distribution déduite de l'observation d'un échantillon de données observables liées à un paramètre ou une information donné. Une telle distribution initiale peut notamment refléter la plausibilité, ou vraisemblance, d'une valeur du paramètre ou de l'information sachant une telle observation. Par exemple, étant donné un échantillon observé en réception d'un système de communication, une distribution initiale (associée à un tel échantillon observé) peut décrire la probabilité de la valeur d'un symbole transmis. Plus généralement, une distribution initiale peut faire référence à tout vecteur de valeurs associé à un paramètre ou une information donnée. Chacune de la pluralité de distributions initiales peut alors être représentée par ou être associée à un vecteur de valeurs. La taille d'un tel vecteur peut alors être assimilée à la taille de la distribution initiale.

Par un vecteur de valeurs, il est entendu un vecteur représentant la distribution initiale. Par exemple, dans le cas d'une distribution initiale associée au lancer d'un dé non-équilibré à six faces, une distribution initiale peut prendre la forme du vecteur de valeurs réelles [0,1 ; 0,3 ; 0,2 ; 0,05 ; 0,15 ; 0,2], dont les valeurs sont associées aux probabilités d'obtention de chacune des six faces du dé.

Par un regroupement de distributions, il est entendu un partitionnement de plusieurs distributions en des sous-ensembles, ou partitions de distributions. En particulier, un tel regroupement peut dépendre de critères de regroupement. Notamment, le regroupement est mis en œuvre, à chaque itération, de sorte que les opérations appliquées sur les sous-ensembles de distributions impliquent des valeurs représentables en machine et évitent le soupassement arithmétique.

Par des opérations de produits terme à terme sur les sous-ensembles de distributions, il est entendu, pour chaque sous-ensemble formé, le calcul d'un produit sur chaque composante des vecteurs de valeurs associées aux distributions du sous-ensemble. Le résultat d'une opération de produit terme à terme entre plusieurs distributions est une distribution, dite distribution intermédiaire de même taille que les distributions du produit.

Par une opération de normalisation, il peut être entendu l'application d'un facteur ou d'une fonction de normalisation sur les composantes d'une distribution (i.e., les valeurs du vecteur associé) afin de normaliser la distribution. Par exemple, une normalisation peut être appliquée à une distribution afin que la somme des valeurs soit égale à une constante, par exemple 1, 0 ou toute autre valeur réelle.

Les caractéristiques exposées dans les paragraphes suivants peuvent, optionnellement, être mises en œuvre, indépendamment les unes des autres ou en combinaison les unes avec les autres :

Dans un mode de réalisation, le calculateur est en outre configuré pour mettre en œuvre :
- une comparaison des valeurs des vecteurs de la pluralité de distributions initiales les unes avec les autres,
de sorte que les sous-ensembles de distributions sont formés en fonction au moins de ladite comparaison.

Avantageusement, le calculateur procède à un pré-traitement de la pluralité de distributions initiales permettant de quantifier les valeurs manipulées par le calculateur. Par une comparaison des valeurs des vecteurs les unes avec les autres, le calculateur peut en particulier quantifier si un traitement d'agrégation de telles valeurs impliquera la manipulation de valeurs résultantes au voisinage de la valeur minimale représentable à un stade donné de l'agrégation. Par conséquent, une telle comparaison permet au calculateur d'anticiper la survenance potentielle d'un soupassement arithmétique, du fait de l'ordre de grandeur absolu ou relatif des valeurs manipulées, et ainsi de définir des critères de regroupement adaptés à la pluralité de distributions initiales manipulée de sorte à permettre l'agrégation de la pluralité sans perte de valeurs.

Dans un mode de réalisation, le calculateur est configuré pour agréger la pluralité de distributions initiales sous la forme d'un arbre de réduction, ledit arbre de réduction comprenant des nœuds correspondant aux opérations de produits suivis par l'opération de normalisation, et des branches correspondant à la formation de sous-ensembles de distributions.

Par conséquent, le calculateur est avantageusement configuré pour mettre en œuvre une agrégation itérative sous la forme d'une arborescence de la pluralité de distributions initiales. En particulier, une telle arborescence permet d'illustrer le nombre et la taille des calculs ainsi que le nombre d'itérations mis en œuvre par le calculateur, via par exemple la largeur, le degré de profondeur (ou de niveaux), le nombre de nœuds et de branches de l'arbre de réduction. Par exemple, le nombre de racines de l'arbre de réduction représente le nombre de sous-ensembles formés. En particulier, l'arbre de réduction contient une seule feuille, représentant la seule distribution agrégée obtenue à l'issue de l'agrégation itérative mise en œuvre par le calculateur.

Par une agrégation sous la forme d'un arbre de réduction, il peut être entendu une construction algorithmique mise en œuvre par le calculateur permettant de hiérarchiser la succession de calculs et de traitement mis en œuvre sur la pluralité de distributions initiales. En particulier, le procédé d'agrégation du calculateur peut tenir compte de contraintes et paramètres structurels, architecturaux et/ou mathématiques liées à l'implémentation de l'arbre de réduction (par exemple, un symétrie des calculs en cascade se reflétant par une symétrie de l'arbre de réduction sur différents niveaux, un nombre maximal de calculs en parallèle se reflétant par une largeur maximale de l'arbre de réduction...).

Dans un mode de réalisation, le calculateur est configuré pour former les sous-ensembles de distributions de tailles maximales pour lesquels les opérations de produits conduisent à des valeurs résultantes strictement supérieures à la valeur minimale représentable, de sorte que le nombre d'opérations de normalisation permettant d'obtenir la distribution agrégée soit minimal.

Par conséquent, le calculateur peut former des sous-ensembles de distributions selon des critères de regroupement donnés, de tels critères de regroupement permettant de tenir compte de contraintes et surcouts algorithmiques ou de temps d'exécution par le calculateur par exemple. En particulier, un critère de regroupement peut être celui de former des sous-ensembles de distributions conduisant à des valeurs manipulées au seuil ou au voisinage de la valeur minimale représentable, de sorte à minimiser le nombre de nœuds dans l'arbre de réduction. En particulier, une telle minimisation permet de minimiser le nombre d'opérations de normalisation mises en œuvre, ce qui réduit avantageusement le surcout algorithmique du calculateur, tout en garantissant l'absence de soupassement arithmétique.

Dans un mode de réalisation, le format de représentation prédéfini appartient à un élément parmi au moins : le format demi-précision d'encodage en 16 bits, le format simple précision d'encodage en 32 bits, le format double précision d'encodage en 64 bits et le format quadruple précision d'encodage en 128 bits.

Dans un mode de réalisation, le calculateur est configuré pour agréger une pluralité de distributions initiales correspondant à des vecteurs de valeurs comprises entre 0 et 1. Par ailleurs, dans un mode de réalisation, la somme des valeurs de chaque vecteur de valeurs comprises entre 0 et 1 est égale à 1.

Par conséquent, le calculateur proposé permet avantageusement de manipuler des valeurs, conduisant potentiellement à des valeurs résultantes décroissantes au fur et à mesure des opérations de produit mises en œuvre sur les valeurs, tout en permettant d'éviter le soupassement arithmétique. Une telle manipulation permet alors un traitement de nombreux cas d'usage, dans le domaine des télécommunications notamment, qui impliquent la reconstruction d'une information agrégée estimée par l'agrégation (par mise en œuvre d'opérations de produit terme à terme) d'une pluralité d'observables (par exemple, issues de plusieurs canaux de transmission ou obtenue par démultiplexage) sous la forme de distributions de probabilités.

Dans un mode de réalisation, le calculateur est configuré pour agréger une pluralité de distributions initiales correspondant à des vecteurs de probabilités de valeurs associées à une même variable observée, en une distribution agrégée correspondant à une estimation d'un vecteur de probabilités des valeurs de ladite variable.

Selon un autre aspect, il est proposé un décodeur comprenant un calculateur tel que décrit précédemment et configuré pour agréger une pluralité de transmissions relatives à des symboles d'une trame CCSK-CP-OFDM en une distribution agrégée des valeurs estimées relatives à chaque symbole transmis.

Selon un autre aspect, il est proposé un dispositif de décodage d'un code correcteur d'erreurs comprenant un calculateur tel que défini précédemment et configuré pour agréger une pluralité de distributions relatives à des bits d'information d'un message transmis en une distribution agrégée des valeurs estimées relatives à chaque bit d'information transmis.

Selon un autre aspect, il est proposé un procédé d'agrégation d'une pluralité de distributions initiales de valeurs en une distributions agrégée mis en œuvre par un calculateur tel que défini précédemment.

Selon un autre aspect, il est proposé un programme informatique comportant des instructions pour la mise en œuvre de tout ou partie d'un procédé tel que défini précédemment lorsque ce programme est exécuté par un processeur. Selon un autre aspect, il est proposé un support d'enregistrement non transitoire, lisible par un ordinateur, sur lequel est enregistré un tel programme.

### Brève description des dessins

D'autres caractéristiques, détails et avantages apparaîtront à la lecture de la description détaillée ci-après, et à l'analyse des dessins annexés, sur lesquels :
**Fig. 1**

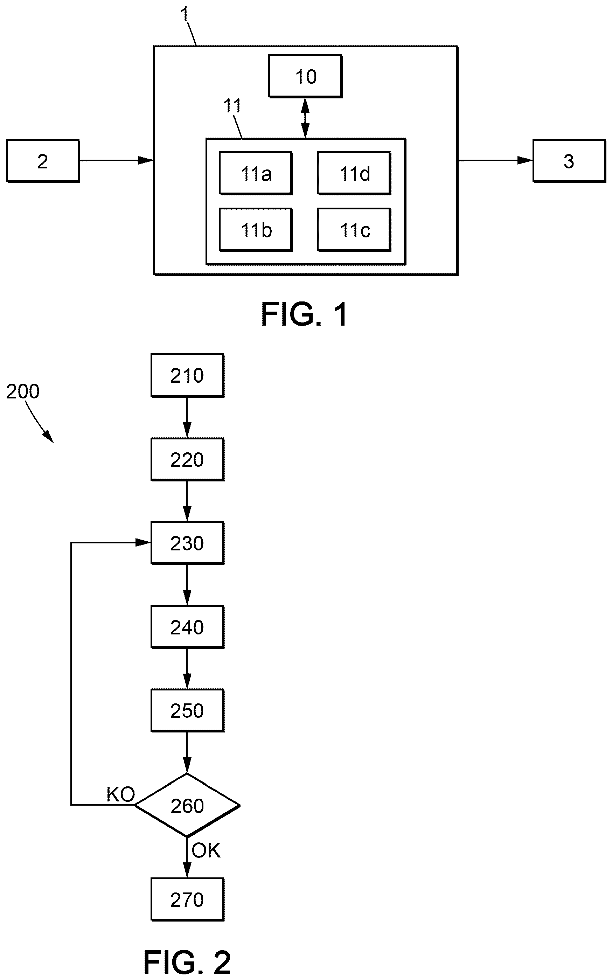

   [Fig. 1] montre un système avec un calculateur de réduction produit selon un mode de réalisation.
**Fig. 2**
   [Fig. 2] montre des étapes d'un procédé de réduction produit selon un mode de réalisation.
**Fig. 3**

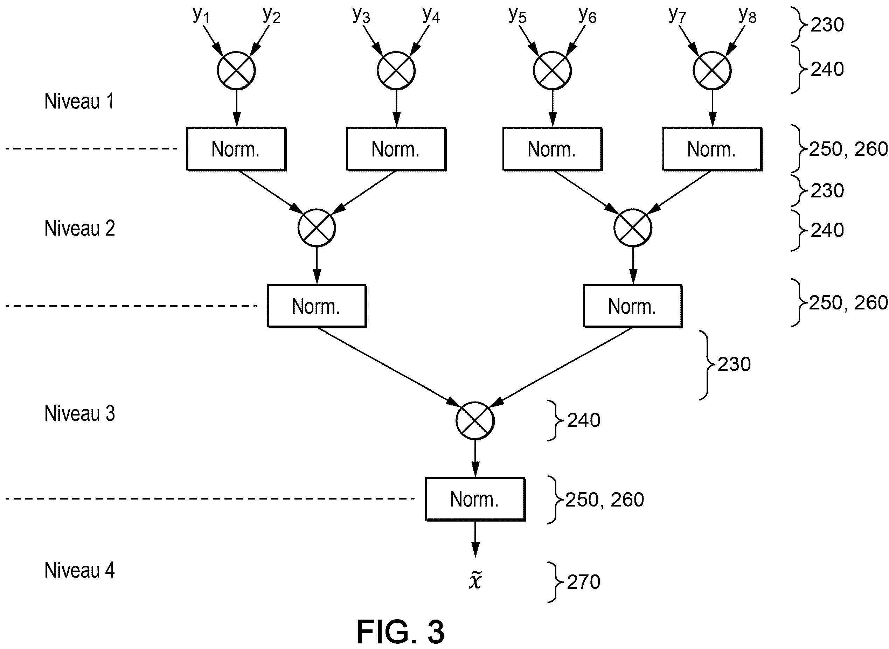

   [Fig. 3] montre un arbre de réduction produit selon un mode de réalisation.
**Fig. 4**

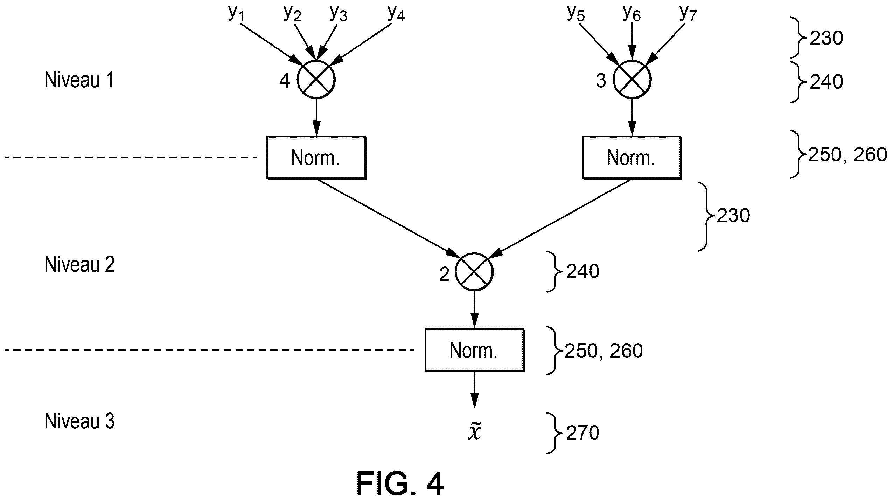

   [Fig. 4] montre un arbre de réduction produit selon un autre mode de réalisation.
**Fig. 5**

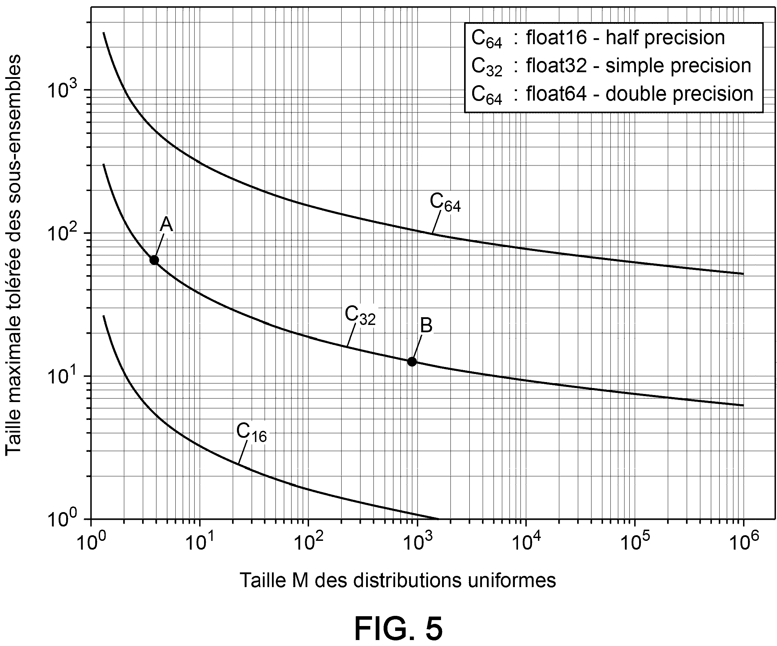

   [Fig. 5] montre un graphique représentant une taille maximale tolérée d'un arbre de réduction produit en fonction d'une taille des distributions initiales selon un mode de réalisation.
**Fig. 6**

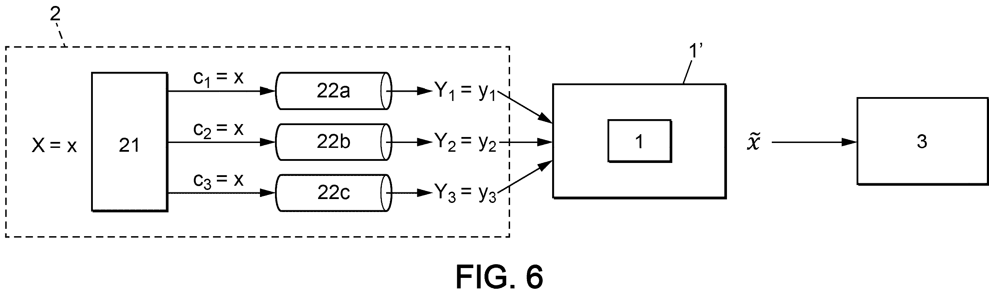

   [Fig. 6] montre un système de décodage avec un calculateur de réduction produit selon un mode de réalisation.

### Description des modes de réalisation

Il est maintenant fait référence à la figure 1. La figure 1 schématise un système de traitement comprenant un calculateur 1, une entité d'entrée 2 d'information et une entité de sortie 3 d'information.

L'entité d'entrée 2 peut correspondre à un système ou un ensemble de sous-systèmes configuré pour transmettre des données observables au calculateur 1. L'entité d'entrée 2 peut par exemple correspondre à, ou inclure, un ensemble de canaux de transmission d'information, des capteurs ou encore un estimateur de données. Les données observables peuvent par exemple correspondre à des données mesurées, captées, entrées, estimées, calculées par le ou les sous-systèmes en amont du calculateur. De telles données observables peuvent par exemple correspondre à des séries temporelles, des distributions ordonnées de données relevées ou mesurées selon différents paramètres, des distributions de probabilités (discrètes) ou encore des fonctions de densité de probabilités continues. En particulier, les données observables peuvent décrire une même variable, un même paramètre ou plus généralement, une même information. Par exemple, les données observables peuvent correspondre à une pluralité de transmissions décrivant un même signal d'entrée (e.g., multiplexé), une pluralité de bits d'information encodés décrivant un même message, ou encore une pluralité d'observations d'occurrences d'un même événement.

Dans le contexte de la présente description, l'entité d'entrée 2 est configurée pour fournir une pluralité de distributions, dites distributions initiales. Les distributions initiales peuvent prendre la forme de vecteurs de valeurs numériques (e.g., des nombres réels) de taille finie, typiquement des valeurs de probabilités. Les distributions initiales peuvent correspondre à des distributions discrètes. Dans un autre exemple, les distributions initiales peuvent correspondre à des estimations de fonctions continues, typiquement de fonctions de densité de probabilité, estimées en des points ou valeurs d'intérêt.

Le calculateur 1 est une entité de traitement configurée pour agréger la pluralité de données observables reçues sous la forme d'une pluralité de distributions initiales de l'entité d'entrée 2 en une distribution agrégée. Typiquement, le calculateur 1 est configuré pour estimer une distribution agrégée permettant de décrire une information donnée (i.e., une variable aléatoire représentant l'issue d'un événement donné, un message encodé, un signal...) à partir de la pluralité de données observables toutes liées à cette même information et transmise par l'entité d'entrée 2. Pour cela, le calculateur 1 peut inclure une unité mémoire 10 et un processeur 11. L'unité mémoire 10 peut inclure une mémoire volatile (dite RAM) et une mémoire non-volatile (dite ROM). L'unité mémoire 10 peut stocker au moins un programme comprenant des instructions pour la mise en œuvre d'un procédé 200 de réduction produit tel qu'il sera décrit par la suite. Le processeur 11 peut inclure une ou plusieurs unités fonctionnelles 11a, 11b, 11c, 11d configurées pour mettre en œuvre le procédé 200 de réduction produit conformément aux instructions stockées en mémoire du calculateur 1.

En particulier, le calculateur 1 est configuré pour stocker, traiter et plus généralement manipuler les données observables dans au moins un format de représentation prédéfini, communément appelé format de représentation machine. Les données observables, et plus particulièrement les valeurs numériques contenues dans les vecteurs formant les distributions initiales, manipulées par le calculateur 1 peuvent être représentées, ou encodées, en machine par des nombres flottants (ou nombres à virgule flottante). La représentation en machine de tels nombres flottants par le calculateur 1 dépend du format de représentation adopté. En particulier, un tel format de représentation définit une valeur minimale et une valeur maximale représentables. Par exemple, le calculateur 1 peut encoder des valeurs dans un format simple précision d'encodage en 32 bits, un format double précision d'encodage en 64 bits ou encore un format quadruple précision d'encodage en 128 bits. Dans d'autres modes de réalisation, tout autre format de représentation peut être considéré par le calculateur 1. Par exemple, pour le format simple précision d'encodage en 32 bits, tout nombre flottant représentable peut être encodé par 1 bit de signe, 8 bits d'exposants et 23 bits de mantisse. Un tel encodage permet alors de représenter des valeurs absolues comprises entre environ 1,17×10⁻³⁸ et 3,4×110⁺³⁸. Autrement dit, lors de la mise en œuvre du procédé 200 de réduction produit et plus généralement lors de la manipulation des distributions initiales, le calculateur 1, adoptant un format de représentation simple précision, peut représenter des valeurs (positives ou négatives), dont la valeur absolue est comprise entre environ 1,17×10⁻³⁸ et 3,4×10⁺³⁸.

Il est maintenant fait référence à la figure 2. La figure 2 représente les étapes d'un procédé 200 de réduction produit, mis en œuvre par un calculateur 1 tel que représenté en figure 1, pour agréger une pluralité de distributions initiales en une distribution agrégée. Typiquement, le procédé 200 de réduction produit peut viser à reconstituer, de façon estimée, une distribution réelle inconnue à partir d'une pluralité de distributions initiales observées.

À une étape 210, une pluralité de distributions initiales est reçue par le calculateur 1. En particulier, la pluralité de distributions initiales peut contenir plusieurs dizaines, centaines ou milliers de distributions initiales. Une telle pluralité de distributions initiales peut notamment prendre la forme d'une pluralité de vecteurs de tailles finies, chaque vecteur étant composé de valeurs numériques. Par exemple, la pluralité de distributions initiales reçues à l'étape 210 peut s'écrire : ${y}_{1} , {y}_{2} , … , {y}_{N}$
où :
- y₁, y₂,...y_{N} sont des vecteurs de valeurs numériques associés aux distributions initiales
- N est le nombre de distributions initiales reçues.

En particulier, la pluralité de distributions initiales reçues à l'étape 210 est liée à une même information d'entrée, modélisée par une variable aléatoire X dont la distribution réelle est inconnue. Par exemple, la variable aléatoire X peut décrire la valeur d'un symbole réellement transmis en entrée d'un système de transmission (par exemple, un bit d'information pouvant prendre la valeur 0 ou la valeur 1). Chacune des distributions initiales yᵢ peut alors être liée à une vraisemblance décrivant la probabilité d'une valeur de la variable aléatoire X, sachant des données observables liées à la variable aléatoire X (par exemple, sachant un symbole reçu en réception, lié à une ou plusieurs observations bruitées en réception).

À une étape 220, un pré-traitement de la pluralité des distributions initiales reçues est mis en œuvre. Par exemple, le pré-traitement de l'étape 220 peut inclure de déterminer le nombre N de distributions initiales et leurs tailles Mᵢ respectives. La taille Mᵢ de chaque distribution initiale peut correspondre à la taille du vecteur yᵢ associé à ladite distribution initiale (i.e., le nombre de valeurs numériques composant le vecteur yᵢ, où i est entier naturel compris entre 1 et N). Autrement dit, chaque distribution initiale peut être représentée par yᵢ = [y_{i,1} ; y_{i,2} ; ... ; y_{i,M}], où les éléments y_{i,j} sont des nombres réels (en particulier, pouvant être compris entre 0 et 1), i et j sont des nombres entiers compris respectivement entre 1 et N et entre 1 et M. La taille Mᵢ de chaque distribution initiale peut dépendre du nombre d'états possibles pour une variable aléatoire ou un paramètre associé à la distribution initiale ou encore du nombre de points ou valeurs d'intérêt en lesquels est estimée chaque distribution initiale. Dans un mode de réalisation, l'étape 220 de pré-traitement permet de considérer des distributions initiales de même taille M. Dans la suite de la description, les distributions initiales yᵢ sont considérées de même taille, notée M.

Le pré-traitement de l'étape 220 peut également inclure d'estimer, d'évaluer ou de déterminer les valeurs contenues dans les vecteurs y₁, y₂,...y_{N} associés aux distributions initiales (i.e., les valeurs y_{i,j}). Le pré-traitement de l'étape 220 peut également inclure d'estimer ou de déterminer un ordre de grandeur ou un intervalle auquel appartient de telles valeurs y_{i,j}. Le pré-traitement de l'étape 220 peut également inclure de comparer les valeurs y_{i,j} les unes avec les autres et d'un vecteur yᵢ à un autre.

Le pré-traitement de l'étape 220 peut également prendre en compte des paramètres de configuration ou d'architecture de calcul du calculateur 1, par exemple des contraintes de traitement symétrique des opérations de calculs ou encore de parité des termes d'un calcul élémentaire. De telles contraintes peuvent alors être prises en compte à l'étape 220. Par exemple, si le nombre N de distributions initiales est impair et qu'une contrainte architecturale ou fonctionnelle du calculateur 1 impose le traitement d'un nombre pair de distributions, l'étape 220 peut inclure d'ajouter des distributions uniformes à la pluralité de distributions initiales jusqu'à obtenir un nombre N multiple de 2.

Le pré-traitement de l'étape 220 peut également inclure toute autre opération d'ordonnancement, de labellisation ou encore de nettoyage des distributions initiales.

Les étapes 230, 240, 250 et 260 décrivent une agrégation itérative de la pluralité des distributions initiales, les étapes 230, 240, 250 et 260 étant répétées jusqu'à obtenir une distribution agrégée. Dans un mode de réalisation, une telle agrégation itérative peut également inclure d'itérer l'étape 220 ou une partie de l'étape 220. Il est à présent décrit deux itérations successives des étapes 230, 240, 250 et 260 afin d'illustrer le procédé 200 de réduction produit.

Dans un mode de réalisation, l'agrégation itérative de la pluralité de distributions initiales en une distribution agrégée peut être illustrée sous une forme d'arborescence hiérarchique, ou arbre réduction produit, comme illustré en figures 3 et 4. Une extrémité de l'arbre (extrémité supérieure sur les figures 3 et 4) comprend une pluralité de racines représentant la pluralité de distributions initiales et une autre extrémité de l'arbre (extrémité inférieure sur les figures 3 et 4) comprend une seule feuille représentant la distribution agrégée.

À une étape 230, des sous-ensembles de distributions sont formés. Pour cela, à une première itération de l'étape 230, les distributions initiales sont regroupées, ou partitionnées, en des sous-ensembles finis, de sorte que le nombre de distributions initiales par sous-ensemble est inférieur au nombre N de la pluralité de distributions initiales. Dans un mode réalisation, chaque sous-ensemble de distributions comprend au moins deux distributions. Dans un mode réalisation, les distributions sont regroupés en un nombre pair de sous-ensembles de distributions.

En référence aux figures 3 et 4, une telle première itération de l'étape 230 est illustrée par les racines des arbres représentées. Les racines illustrées en figure 3 présentent huit distributions initiales (N=8) regroupées en quatre sous-ensembles formés par des paires de vecteurs {y₁ ; y₂}, {y₃ ; y₄}, {y₅ ; y₆} et {y₇ ; y₈}, chaque sous-ensemble de distributions comprend alors deux distributions initiales. Les racines illustrées en figure 4 présentent sept distributions initiales (N=7) regroupées en deux sous-ensembles formés d'une part par les vecteurs {y₁ ; y₂ ; y₃ ; y₄} et d'autre part par les vecteurs {y₅ ; y₆ ; y₇}. En particulier, l'arbre de réduction produit peut être symétrique (c'est-à-dire que tous les sous-ensembles de distributions contiennent le même nombre de distributions, comme illustré en figure 3) ou asymétrique (c'est-à-dire que les sous-ensembles de distributions peuvent contenir des nombres différents de distributions, comme illustré en figure 4).

Un ou plusieurs critères de regroupement peuvent être considérés à l'étape 230 pour former les sous-ensembles de distributions. Le nombre de sous-ensembles de distributions formés et le nombre de distributions par sous-ensemble peuvent dépendre de tels critères de regroupement. Par exemple, un critère de regroupement peut être déterminé à partir de valeurs déterminées à l'étape 220 de pré-traitement.

En particulier, les sous-ensembles de distributions sont formés de sorte que les produits terme à terme calculés sur chaque sous-ensemble de distributions conduisent à des valeurs strictement supérieures à la valeur minimale représentable dans le format de représentation prédéfini du calculateur 1. Pour cela, dans un mode de réalisation de la première itération, le regroupement des distributions initiales à l'étape 230 peut dépendre des valeurs composant les vecteurs associés aux distributions initiales. Dans un mode de réalisation de la première itération, le regroupement des distributions initiales à l'étape 230 peut dépendre de la comparaison des valeurs composant les vecteurs yᵢ associés aux distributions initiales les unes avec les autres et/ou d'un vecteur yᵢ à l'autre.

Dans un mode de réalisation, un critère de regroupement peut être de maximiser une valeur moyenne associée au produit terme à terme calculé sur chaque sous-ensemble, de sorte à éviter la survenance d'un soupassement arithmétique potentiel lié aux opérations de produit mises en œuvre sur un tel sous-ensemble. Dans un mode de réalisation, un critère de regroupement peut être de minimiser une valeur moyenne associée au produit terme à terme calculé sur chaque sous-ensemble tout en conservant des valeurs supérieures à la valeur minimale représentable, de sorte à optimiser la complexité algorithmique du procédé 200 tout en évitant un soupassement arithmétique (lorsque les valeurs des vecteurs associés aux distributions sont comprises entre 0 et 1 par exemple, cela revient à maximiser une taille S de chaque sous-ensemble de distributions, c'est-à-dire le nombre de distributions sur lesquelles les opérations de produit terme à terme sont mises en œuvre). Dans un autre mode de réalisation, un critère de regroupement peut être de former des sous-ensembles de tailles maximales pour lesquels les opérations de produits terme à terme conduisent à des valeurs résultantes strictement supérieures à la valeur minimale représentable sur chacun des sous-ensembles de distributions. Autrement dit, un critère de regroupement peut être de former un nombre minimal de sous-ensembles de distributions respectant la condition selon laquelle les produits terme à terme calculés sur chaque sous-ensemble de distributions conduisent à des valeurs strictement supérieures à la valeur minimale représentable. Les critères de regroupement peuvent être liés à un objectif de minimiser la complexité, le temps de calcul, l'espace de stockage utilisé (notamment en mémoire volatile) lors de la mise en œuvre du procédé 200 d'agrégation.

À une étape 240, une réduction produit est mise en œuvre sur chaque sous-ensemble de distributions formé. Autrement dit, à l'étape 240, pour chaque sous-ensemble de distributions, des opérations de produits terme à terme sont mises en œuvre entre les distributions constituant le sous-ensemble de distributions.

Par exemple, en référence à la figure 4, les produits terme à terme mis en œuvre sur chacun des deux sous-ensembles de distribution formés à l'issue de la première itération de l'étape 230 conduisent respectivement aux vecteurs :
${y}_{1} \times {y}_{2} \times {y}_{3} \times {y}_{4} = \left[{\prod }_{i = 1}^{4} {y}_{i , 1}; {\prod }_{i = 1}^{4} {y}_{i , 2};…; {\prod }_{i = 1}^{4} {y}_{i , M}\right] ,$ et
${y}_{5} \times {y}_{6} \times {y}_{7} = \left[{\prod }_{i = 5}^{7} {y}_{i , 1}; {\prod }_{i = 5}^{7} {y}_{i , 2};…; {\prod }_{i = 5}^{7} {y}_{i , M}\right]$
où, pour tout i entier compris entre 1 et N=7, yᵢ est un vecteur correspondant à une distribution, pour tout j entier compris entre 1 et M, y_{i,j} est une valeur numérique réelle correspondant à la j-ème composante du vecteur yᵢ et Π*ᵢ y_{i,j}* est le produit de la j-ème composante (réelle) des vecteurs yᵢ, M est la taille de chaque vecteur yᵢ.

En particulier, il est précisé que le produit yᵢ ×y_{i'} (ou i et i' sont des entiers compris entre 1 et N) correspond à un vecteur de même taille que chacun des vecteurs yᵢ et y_{i'}. Par la suite, la j-ème composante d'un tel vecteur sera notée yᵢ ×y_{i'}[j] afin de simplifier l'écriture.

À l'issue de l'étape 240, la réduction produit mise en œuvre terme à terme résulte en une distribution intermédiaire obtenue pour chaque sous-ensemble de distributions. À l'instar d'une distribution initiale, une telle distribution intermédiaire peut prendre la forme d'un vecteur dont les valeurs et la taille sont liées aux distributions initiales du sous-ensemble de distributions dont la distribution intermédiaire est issue. À l'issue de l'étape 240, le nombre de distributions intermédiaires obtenu est égal au nombre de sous-ensembles de distributions formés à l'étape 230 précédente.

En référence aux figures 3 et 4, quatre et deux distributions intermédiaires sont obtenues à l'issue de l'étape 240 au premier degré de profondeur (ou niveau 1) des arbres réduction produit illustrés.

À une étape 250, une normalisation est mise en œuvre sur chaque distribution intermédiaire. Autrement dit, l'opération de normalisation est mise en œuvre pour chaque sous-ensemble de distributions. Une telle étape 250 est illustrée par l'élément « Norm. » sur les figures 3 et 4. Dans un mode de réalisation, une telle étape 250 de normalisation implique d'appliquer un facteur de normalisation aux composantes des distributions intermédiaires. En particulier, un tel facteur de normalisation peut permettre de ramener la somme de telles composantes à 1, et ainsi de rehausser les valeurs résultant des opérations de produit vis-à-vis de la limite de soupassement arithmétique (liée à la valeur minimale représentable), notamment dans le cas de distributions de probabilités (autrement dit, à l'issue d'une telle étape 250 de normalisation, la somme des composantes de chaque vecteur correspondant à une distribution intermédiaire est égale à 1). Dans un mode de réalisation, une telle étape de normalisation correspond à un réhaussement des valeurs obtenues à l'issue des opérations de produit de l'étape 240, de sorte que la valeur obtenue après normalisation est supérieure à la valeur obtenue à l'issue des opérations de produit.

Par exemple, en référence à la figure 3, les résultats obtenus aux quatre premiers nœuds internes au premier degré de l'arbre représenté sont respectivement :
$\frac{{y}_{1} \times {y}_{2}}{{\sum }_{j = 1}^{M} {y}_{1} \times {y}_{2} \left[j\right]} , \frac{{y}_{3} \times {y}_{4}}{{\sum }_{j = 1}^{M} {y}_{3} \times {y}_{4} \left[j\right]} , \frac{{y}_{5} \times {y}_{6}}{{\sum }_{j = 1}^{M} {y}_{5} \times {y}_{6} \left[j\right]} et \frac{{y}_{7} \times {y}_{8}}{{\sum }_{j = 1}^{M} {y}_{7} \times {y}_{8} \left[j\right]} .$

À l'issue de l'étape 250, il est alors obtenu, pour chaque sous-ensemble de distributions, une distribution intermédiaire normalisée.

À une étape 260, il est considéré le nombre de distributions intermédiaires obtenues.

Si une seule distribution intermédiaire est obtenue, une telle distribution intermédiaire correspond à la distribution agrégée et le procédé 200 prend fin à une étape 270 d'obtention de la distribution agrégée à partir de la pluralité de distributions initiales.

Si au moins deux distributions intermédiaires sont obtenues, l'agrégation se poursuit comme il sera décrit ci-après, par une nouvelle itération des étapes 230, 240, 250 et 260. En référence aux figures 3 et 4, à l'issue de la première itération (i.e., du niveau 1 de profondeur des arbres représentés), quatre et deux distributions intermédiaires sont obtenues respectivement sur les arbres. Un deuxième degré de profondeur des arbres des figures 3 et 4 est alors considéré.

Lors d'une deuxième itération de l'étape 230, un regroupement des distributions intermédiaires est mis en œuvre. Les critères de regroupement de telles distributions intermédiaires peuvent correspondre aux critères de regroupement décrits pour la première itération. De tels critères de regroupement peuvent différer d'une itération à une autre. En particulier, pour cela, une partie de l'étape 220 peut avoir été itérée afin de quantifier les distributions intermédiaires à la façon de l'étape 220 mise en œuvre sur les distributions initiales afin de permettre la mise en œuvre des critères de regroupement.

En référence à la figure 3, au deuxième degré de profondeur de l'arbre (niveau 2 sur la figure 3), deux sous-ensembles de distributions sont formés à partir des quatre distributions intermédiaires. En référence à la figure 4, au deuxième degré de profondeur de l'arbre (niveau 2 sur la figure 4), un sous-ensemble de distributions est formé à partir des deux distributions intermédiaires.

Similairement à la première itération, les étapes 240 de produit terme à terme et 250 de normalisation sont mises en œuvre sur les sous-ensembles de distributions (cette fois intermédiaires) ainsi formés.

Similairement à la première itération, une étape 260 est mise en œuvre. En référence à la figure 3, à l'issue de la deuxième itération, au deuxième degré de profondeur de l'arbre représenté (niveau 2 sur la figure 3), deux distributions intermédiaires sont obtenues. Une troisième itération des étapes 230, 240, 250 est alors mise en œuvre sur les distributions intermédiaires obtenues au niveau 3, conduisant à un quatrième degré de profondeur de l'arbre de la figure 3 (niveau 4). À un tel degré de profondeur de l'arbre de la figure 3, une unique distribution intermédiaire est obtenue. L'itération prend alors fin et l'arbre final de la figure 3 possède quatre niveaux de profondeur, le niveau 4 aboutissant à une feuille de l'arbre.

En référence à la figure 4, à l'issue de la deuxième itération, au deuxième degré de profondeur de l'arbre représenté (niveau 2 sur la figure 4), une unique distribution intermédiaire est obtenue au niveau 3 de l'arbre. L'itération prend alors fin et l'arbre final de la figure 4 possède trois niveaux de profondeur, le niveau 3 aboutissant à une feuille de l'arbre.

À une étape 270, l'agrégation itérative prend fin et une unique distribution agrégée *x̃* est obtenue. En particulier, une telle distribution agrégée *x̃* permet de décrire une information en tenant compte de l'ensemble des données observables en entrée du calculateur 1 par agrégation de ces données observables. L'étape 270 peut notamment inclure d'exploiter ou de transmettre une telle distribution agrégée *x̃* à l'entité de sortie 3 d'information, par exemple afin d'utiliser une telle distribution agrégée *x̃* dans d'autres calculs ou traitements du système de traitement.

Le procédé 200 de réduction produit alternant les opérations de produits terme à terme et de normalisation sur des sous-ensembles de distributions permet alors d'obtenir un résultat final mathématiquement identique à des méthodes agrégeant l'ensemble des distributions initiales avant de normaliser le résultat agrégé obtenu. Par exemple, en considérant l'arbre de réduction produit de la figure 4, la distribution agrégée *x̃* obtenue correspond à : $\begin{matrix}\frac{\left[\frac{{y}_{1} \times {y}_{2} \times {y}_{3} \times {y}_{4}}{{\sum }_{j = 1}^{M} {y}_{1} \times {y}_{2} \times {y}_{3} \times {y}_{4} \left[j\right]}\right] \times \left[\frac{{y}_{5} \times {y}_{6} \times {y}_{7}}{{\sum }_{j = 1}^{M} {y}_{5} \times {y}_{6} \times {y}_{7} \left[j\right]}\right]}{{\sum }_{k = 1}^{M} \left(\left[\frac{{y}_{1} \times {y}_{2} \times {y}_{3} \times {y}_{4}}{{\sum }_{j = 1}^{M} {y}_{1} \times {y}_{2} \times {y}_{3} \times {y}_{4} \left[j\right]}\right]\times \left[\frac{{y}_{5} \times {y}_{6} \times {y}_{7}}{{\sum }_{j = 1}^{M} {y}_{5} \times {y}_{6} \times {y}_{7} \left[j\right]}\right]\right) \left[k\right]} \\ ↔ \frac{\frac{{y}_{1} \times {y}_{2} \times {y}_{3} \times {y}_{4} \times {y}_{5} \times {y}_{6} \times {y}_{7}}{{\sum }_{j = 1}^{M} {y}_{1} \times {y}_{2} \times {y}_{3} \times {y}_{4} \left[j\right] \times {\sum }_{j = 1}^{M} {y}_{5} \times {y}_{6} \times {y}_{7} \left[j\right]}}{\frac{{\sum }_{k = 1}^{M} \left({y}_{1}\times {y}_{2}\times {y}_{3}\times {y}_{4}\times {y}_{5}\times {y}_{6}\times {y}_{7}\right) \left[k\right]}{{\sum }_{j = 1}^{M} {y}_{1} \times {y}_{2} \times {y}_{3} \times {y}_{4} \left[j\right] \times {\sum }_{j = 1}^{M} {y}_{5} \times {y}_{6} \times {y}_{7} \left[j\right]}}\end{matrix}$

Une telle valeur est alors mathématiquement égale au résultat d'un produit normalisé mis en œuvre sur l'ensemble des distributions initiales : $\frac{{y}_{1} \times {y}_{2} \times {y}_{3} \times {y}_{4} \times {y}_{5} \times {y}_{6} \times {y}_{7}}{{\sum }_{k = 1}^{M} \left({y}_{1}\times {y}_{2}\times {y}_{3}\times {y}_{4}\times {y}_{5}\times {y}_{6}\times {y}_{7}\right) \left[k\right]}$

Cependant, d'un point de vue numérique, le calcul en machine d'un tel produit normalisé (par exemple, le produit terme à terme *y*₁ × *y*₂ × *y*₃ × *y*₄ × *y*₅ × *y*₆ × *y*₇) de façon directe peut entraîner des phénomènes de soupassement arithmétique (ou en anglais, « arithmetic underflow »), notamment lorsque il s'agit d'agréger une pluralité de distributions initiales, pouvant potentiellement inclure plusieurs dizaines, centaines voire milliers de distributions initiales, chaque distribution initiale pouvant elle-même inclure plusieurs dizaines, centaines ou milliers d'états (autrement dit, N et M peuvent être de l'ordre de plusieurs dizaines, centaines ou milliers). L'agrégation d'une telle quantité de données observables implique alors la mise en œuvre d'un grand nombre de produits. En particulier, lorsque les distributions initiales comprennent des valeurs très petites (typiquement, comprises entre 0 et 1, comme cela est le cas pour les distributions de probabilités), les opérations de produit terme à terme entraînent la manipulation de valeurs décroissantes pouvant potentiellement décroître en deçà de la valeur minimale représentable en machine.

De ce fait, le procédé 200 proposé est mis en œuvre de sorte que les valeurs manipulées tout au long de l'agrégation itérative ne soient pas en deçà de la valeur minimale représentable. Dans un mode de réalisation, de telles valeurs des vecteurs yᵢ associés aux distributions initiales sont comprises entre 0 et 1. Dans un mode de réalisation, des opérations de produit mises en œuvre sur de telles valeurs conduisent à des résultats au voisinage de la valeur minimale représentable selon le format de représentation du calculateur 1. Afin de tenir compte d'une telle contrainte de représentation en machine des valeurs, les critères de regroupement des distributions (initiales ou intermédiaires) en sous-ensembles de distributions à l'étape 230 tiennent compte de paramètres liés aux distributions (notamment initiales), tels que le nombre N de distributions initiales, la taille (ou les tailles) M des vecteurs yᵢ associés à de telles distributions (initiales et intermédiaires), l'ordre de grandeur absolu des valeurs de tels vecteurs et/ou encore les écarts entre de telles valeurs d'une distribution initiale à une autre. Le partitionnement des distributions initiales et intermédiaires en sous-ensembles, et donc les paramètres de dimensionnement de l'arbre de réduction produit (nombre de nœuds, nombre de degrés de profondeur de l'arbre) permettant d'éviter le phénomène de soupassement arithmétique varient en fonction des paramètres de distributions et du format de représentation adopté.

Par exemple, en considérant N distributions uniformes de même taille M et un format de représentation associé à une valeur minimale représentable xₘᵢₙ, un soupassement arithmétique a lieu pour les valeurs suivantes :
$M > \sqrt[N]{\frac{1}{{x}_{min}}} et N > - \frac{log \left({x}_{min}\right)}{log \left(M\right)} .$

En référence à la figure 5, il est illustré un critère de regroupement des distributions en sous-ensembles en tenant compte de la taille M des distributions, considérées uniformes de même taille M, et du format de représentation du calculateur 1. Le graphique illustré en figure 5 représente la taille maximale tolérée d'un sous-ensemble de distributions (c'est-à-dire la taille maximale d'un sous-ensemble de distributions permettant d'éviter un soupassement arithmétique) en fonction de la taille M des distributions. La figure 5 illustre notamment un telle taille maximale pour différents formats de représentation, ici les formats demi-précision d'encodage en 16 bits, simple précision d'encodage en 32 bits et double précision d'encodage en 64 bits respectivement associés aux courbes C₁₆, C₃₂ et C₆₄.

En référence à la figure 5, il est par exemple observé, au point A, que pour le format de représentation de 32 bits et pour une taille M de distribution relativement faible, par exemple M = 4, des sous-ensembles de distributions faisant intervenir moins de 60 distributions permettent de manipuler des valeurs supérieures à la valeur minimale représentable (et permettent donc l'agrégation par produits sans engendrer de phénomène de soupassement arithmétique). Dans un mode de réalisation dans lequel le format de représentation du calculateur 1 est le format simple précision et la taille des vecteurs yᵢ associés aux distributions initiales est de l'ordre de M=4, un critère de regroupement peut alors être de former des sous-ensembles de distribution d'environ 60 distributions à chaque itération de l'agrégation, de sorte à maximiser le nombre de distributions par sous-ensemble tout en évitant le phénomène de soupassement arithmétique. Une telle maximisation du nombre de distributions par sous-ensemble permet alors de minimiser le degré de profondeur de l'arbre de réduction produit, le nombre d'opérations de normalisation à mettre en œuvre et donc la complexité du procédé 200.

Dans un autre exemple, en référence à la figure 5, il est observé au point B que pour ce même format de représentation de 32 bits mais pour une taille M de distribution plus importante, par exemple M = 1000, des sous-ensembles de distributions faisant intervenir moins d'environ 12 distributions permettent de manipuler des valeurs supérieures à la valeur minimale représentable (et permettent donc l'agrégation par produits sans engendrer de phénomène de soupassement arithmétique).

Ainsi, le dimensionnement de l'arbre de réduction produit, autrement dit le regroupement des distributions en sous-ensembles, est à adapter en fonction du format de représentation du calculateur 1 et des paramètres de distributions, de sorte à permettre une optimisation d'exécution du procédé 200. Selon de tels paramètres, il est possible d'adapter la taille de chacun des sous-ensembles de distributions formés et le nombre de nœuds (i.e., le nombre de nœuds de calcul au niveau desquels des opérations de produit terme à terme et de normalisation sont mises en œuvre) à chaque degré de profondeur de l'arbre, de sorte à maîtriser la complexité ou le surcout algorithmique de la mise en œuvre du procédé 200. Par exemple, en considérant des sous-ensembles de deux distributions dans un arbre symétrique, typiquement un arbre binaire équilibré (ou, pour des sous-ensembles de même taille S, pour des arbres S-aires équilibrés), le nombre de nœuds dans l'arbre de réduction produit augmente linéairement avec le nombre N de distributions à agréger, lorsque N tend vers l'infini : le nombre de calculs à mettre en œuvre pour l'agrégation itérative des distributions n'explose pas lorsque le nombre de distributions à agréger augmente. Un tel nombre de nœuds tend notamment vers $\frac{N}{S - 1}$, lorsque les N distributions initiales sont itérativement regroupées par sous-ensembles de même taille S, au sein d'un arbre S-aire équilibré et complet.

### Exemples

### Premier exemple de réalisation

Dans un premier exemple de réalisation, il est considéré des systèmes de communication s'appuyant sur une représentation relative de l'information à transmettre ou à traiter (par exemple, un signal). Par exemple, dans le contexte d'un système de communication (par exemple, utilisant une modulation CCSK, QPSK, QAM etc.), une information sous la forme d'une succession de symboles peut être intégrée dans une trame (e.g., une trame OFDM, et plus particulièrement une trame CCSK-CP-OFDM), sur des sous-porteuses en fréquence. Par exemple, une trame CCSK-CP-OFDM peut prendre la forme d'une trame temps-fréquence, chaque pas de temps contenant un symbole CCSK complet sur l'ensemble des sous-porteuses en fréquence. Une telle trame peut être schématisée par une matrice de taille (M,N) suivante: $\left[\begin{matrix}{c}_{1} \left(M\right) & ⋯ & {c}_{N} \left(M\right) \\ ⋮ & ⋱ & ⋮ \\ {c}_{1} \left(1\right) & ⋯ & {c}_{N} \left(1\right)\end{matrix}\right]$
où cₐ(b) est une composante d'un symbole CCSK sur le a-ème pas de temps (a étant un entier compris entre 1 et N) et sur la b-ème sous-porteuse en fréquence (b étant un entier compris entre 1 et M).

Une telle trame CCSK-CP-OFDM peut par exemple être représentée, en réception, de façon différentielle, sous la forme d'une matrice de probabilités de décalages relatifs entre les symboles de la trame. Une telle matrice peut par exemple s'écrire : $\left[\begin{matrix}{P}_{1 / 1} & ⋯ & {P}_{N / 1} \\ ⋮ & ⋱ & ⋮ \\ {P}_{1 / N} & ⋯ & {P}_{N / N}\end{matrix}\right]$
où P_{i/j} est un vecteur de taille M (c'est-à-dire de la taille d'un symbole CCSK complet) s'apparentant à une distribution de probabilité du décalage relatif entre les symboles i et j de la trame CCSK-CP-OFDM.

En particulier, chaque composante P_{i/j}[k] du vecteur P_{i/j} (où k est un entier compris entre 1 et M) représente la probabilité que la valeur de la différence entre les symboles i et j de la trame CCSK-CP-OFDM corresponde à la valeur k.

Une telle matrice de probabilité de décalages relatifs entre les symboles de la trame peut alors être utilisée pour déduire des distributions relatives (i.e., de décalage relatif) pour toute paire de symboles de la trame. Par exemple, à partir des distributions P_{3/1} et P_{5/3} (i.e., respectivement les distributions d'écarts relatifs entre les symboles 1 et 3, et les symboles 3 et 5 de la trame), il est possible de déduire une distribution d'écarts relatifs entre les symboles 5 et 1, par relation de transitivité par rapport au symbole 3. Par exemple, un tel écart peut être déduit à l'aide d'un opération de convolution ou de corrélation croisée.

Par généralisation, pour tous symboles i et j de la trame CCSK-CP-OFDM, une distribution relative du symbole i par rapport au symbole j peut être déduite en combinant des distributions relatives issues de la matrice de probabilité de décalages relatifs entre les symboles de la trame : ${P}_{i / j}^{\left(a\right)} = {P}_{i / a} ∗ {P}_{a / j}$
où P_{i/j}^{(a)} est une distribution d'écarts relatifs entre les symboles i et j par relation de transitivité par rapport au symbole a, P_{i/a} et P_{a/j} sont des distributions relatives issues de la matrice de probabilité de décalages relatifs entre les symboles respectifs i et a, et a et j, de la trame, et où i, j, a sont des symboles de la trame.

La matrice de probabilité de décalages relatifs entre les symboles de la trame fournit alors une diversité d'estimations des écarts relatifs entre deux symboles d'une trame. Par exemple, une première estimation est fournie par la distribution P_{i/j} elle-même issue de la matrice. D'autres estimations sont fournies par la pluralité de distributions pouvant être déduite par transitivité par rapport à tous les autres symboles de la trame.

Une agrégation d'une telle pluralité de distributions peut alors permettre d'aboutir à une distribution agrégée reflétant une estimation de la distribution des écarts relatifs entre deux symboles d'une trame CCSK-CP-OFDM. Autrement dit, une telle distribution agrégée peut être déterminée par : ${{P}^{˜}}_{i / j} = {P}_{i / j} \times {\prod }_{a} {P}_{i / j}^{\left(a\right)}$
où *P̃*_{*i*/*j*} est une distribution agrégée estimée des écarts relatifs entre les symboles i et j de la trame ; P_{i/j} est la distribution des écarts relatifs entre les symboles i et j de la trame issue de la matrice de probabilité de décalages relatifs entre les symboles de la trame ; ${\prod }_{a} {P}_{i / j}^{\left(a\right)}$ est le produit des distributions pouvant être déduite par transitivité par rapport à tous les autres symboles de la trame.

Une telle distribution agrégée *P̃*_{*i*/*j*} permettant d'estimer une distribution relative d'un symbole i d'une trame par rapport à un symbole j peut alors être mis en œuvre par un calculateur 1 intégré à un décodeur de la trame CCSK-CP-OFDM à partir d'une pluralité de distributions initiales ${P}_{i / j}^{\left(a\right)}$ obtenues pour chaque symbole a de la trame.

### Deuxième exemple de réalisation

Dans un deuxième exemple de réalisation, il est considéré un code correcteur d'erreurs ou un mécanisme de répétition, dans lequel des portions d'information sont encodées avec une redondance afin de tenir compte d'éventuelles erreurs ou pertes lors de la transmission.

Par exemple, en référence à la figure 6, une entité d'entrée 2 peut inclure un encodeur 21, configuré pour encoder chaque bit x d'une information (e.g., un message) X (modélisée par une variable aléatoire ici). Un tel encodeur 21 peut alors intégrer un mécanisme de répétition, par exemple un code à répétition. Dans l'exemple de la figure 6, chaque bit est répété trois fois via trois canaux de transmission 22a, 22b, 22c (autrement dit, chaque bit x d'information est transmis trois fois).

Il résulte d'une telle redondance d'information une pluralité (ici trois, dans l'exemple de la figure 6) de transmissions Y₁, Y₂, Y₃ contenant une redondance d'information. Une telle redondance d'information peut alors être agrégée lors du décodage par un dispositif de décodage 1' intégrant un calculateur 1 configuré pour agréger la pluralité de transmissions redondantes en une information agrégée *x̃*. Une telle information agrégée peut être notée *x̃*.

Plus précisément, dans le contexte de la figure 6, l'estimation du bit d'information transmis peut par exemple être déterminée par une approche par maximum de vraisemblance, via l'expression suivante : ${x}^{˜} = {Argmax}_{x} {P}_{\left.X\right| {Y}_{1} , {Y}_{2} , {Y}_{3}} \left(\left.x\right|{y}_{1},{y}_{2},{y}_{3}\right)$

Une telle expression peut être généralisable à une variable aléatoire X comptant une pluralité d'états et pour une pluralité de transmissions yᵢ (par exemple N transmissions, N=3 dans la figure 6).

Dans le contexte de la figure 6, une telle expression peut être écrite de la façon suivante, X étant une variable aléatoire binaire (bit d'information de 0 ou 1) : ${x}^{˜} = Argmax \left(\begin{matrix}{P}_{\left.X\right| {Y}_{1}} \left(x=\left.0\right|{y}_{1}\right) \times {P}_{\left.X\right| {Y}_{2}} \left(x=\left.0\right|{y}_{2}\right) \times {P}_{\left.X\right| {Y}_{3}} \left(x=\left.0\right|{y}_{3}\right) \\ {P}_{\left.X\right| {Y}_{1}} \left(x=\left.1\right|{y}_{1}\right) \times {P}_{\left.X\right| {Y}_{2}} \left(x=\left.1\right|{y}_{2}\right) \times {P}_{\left.X\right| {Y}_{3}} \left(x=\left.1\right|{y}_{3}\right)\end{matrix}\right)$

Plus généralement, l'estimation d'une distribution de la variable aléatoire X à partir d'une pluralité d'observations Yᵢ peut s'exprimer par le maximum de vraisemblance de l'expression suivante (illustrée avec i compris entre 1 et N=3, dans le contexte de la figure 6) : ${P}_{\left.X\right| {Y}_{1} , {Y}_{2} , {Y}_{3}} \left(\left.x\right|{y}_{1},{y}_{2},{y}_{3}\right) = \frac{{P}_{\left.{Y}_{1}, {Y}_{2}, {Y}_{3}\right| X} \left(\left.{y}_{1}, {y}_{2}, {y}_{3}\right|x\right) \times {P}_{X} \left(x\right)}{{P}_{{Y}_{1} , {Y}_{2} , {Y}_{3}} \left({y}_{1}, {y}_{2}, {y}_{3}\right)}$

En considérant un état X fixé (typiquement, un bit d'information X=x donné), les transmissions Y₁, Y₂, Y₃ peuvent être considérés indépendantes si les canaux de transmission 22a, 22b, 22c sont indépendants. Dans ce cas : $\begin{matrix}{P}_{X \left|{Y}_{1}, {Y}_{2}, {Y}_{3}\right.} \left(x\left|{y}_{1}, {y}_{2}, {y}_{3}\right.\right) = \frac{{P}_{{Y}_{1} \left|X\right.} \left({y}_{1}\left|x\right.\right) \times {P}_{{Y}_{2} \left|X\right.} \left({y}_{2}\left|x\right.\right) \times {P}_{{Y}_{3} \left|X\right.} \left({y}_{3}\left|x\right.\right) \times {P}_{X} \left(x\right)}{{P}_{{Y}_{1} , {Y}_{2} , {Y}_{3}} \left({y}_{1}, {y}_{2}, {y}_{3}\right)} \\ = \frac{{P}_{X \left|{Y}_{1}\right.} \left(x\left|{y}_{1}\right.\right) \times {P}_{{Y}_{1}} \left({y}_{1}\right)}{{P}_{X} \left(x\right)} \times \frac{{P}_{X \left|{Y}_{2}\right.} \left(x\left|{y}_{2}\right.\right) \times {P}_{{Y}_{2}} \left({y}_{2}\right)}{{P}_{X} \left(x\right)} \times \frac{{P}_{X \left|{Y}_{3}\right.} \left(x\left|{y}_{3}\right.\right) \times {P}_{{Y}_{3}} \left({y}_{3}\right)}{{P}_{X} \left(x\right)} \\ = \frac{{P}_{X} \left(x\right)}{{P}_{{Y}_{1} , {Y}_{2} , {Y}_{3}} \left({y}_{1}, {y}_{2}, {y}_{3}\right)} \times {\prod }_{j = 1}^{3} \frac{{P}_{X \left|{Y}_{j}\right.} \left(x\left|{y}_{j}\right.\right) \times {P}_{{Y}_{j}} \left({y}_{j}\right)}{{P}_{X} \left(x\right)}\end{matrix}$

Dans le contexte d'une pluralité de distributions (ou transmissions) initiales obtenues et d'une variable aléatoire X suivant une loi uniforme, les éléments *Pₓ*(*x*), *P*_{*Y*₁*,Y*₂*,Y*₃}(*y*₁,*y*₂,*y*₃) et *P_{Yⱼ}*(*yⱼ*) sont constants et peuvent être représentés par un facteur constant C. L'estimation d'une distribution X à partir de la pluralité de distribution Yᵢ peut alors être simplifiée par : ${P}_{\left.X\right| {Y}_{1} , {Y}_{2} , {Y}_{3}} \left(\left.x\right|{y}_{1},{y}_{2},{y}_{3}\right) = C \times {\prod }_{j = 1}^{3} {P}_{\left.X\right| {Y}_{j}} \left(\left.x\right|{y}_{j}\right)$

Ainsi, dans le contexte d'une pluralité d'informations redondantes ou d'une pluralité d'estimations liées à un même paramètre ou une même information X (e.g., un bit d'information x ou une distribution d'écarts relatifs entre deux symboles d'une trame), l'agrégation d'une telle pluralité d'informations ou d'estimations sous forme de distributions peut être assimilée au calcul d'un produit de distributions. Un calculateur 1 tel que décrit en figure 1 et configuré pour mettre en œuvre un procédé 200 d'agrégation tel que décrit en figure 2 peut alors être utilisé.

En particulier, dans les exemples d'application décrits, un tel calculateur peut intervenir lors d'une phase de décodage d'un message encodé ou d'une trame OFDM, par exemple en étant intégré à un décodeur ou un dispositif de décodage 1', de sorte à restituer une information estimée sous une forme agrégée.

### Liste des signes de référence

- 1 : calculateur
- 1' : dispositif de décodage
- 10 : unité mémoire
- 11 : processeur
- 11a, 11b, 11c, 11d : unités fonctionnelles
- 2 : entité d'entrée
- 21 : encodeur
- 22a, 22b, 22c : canaux de transmission
- 3 : entité de sortie

## Revendications

1. Calculateur (1) configuré pour agréger une pluralité de distributions initiales en une distribution agrégée, lesdites distributions initiales étant associées à des vecteurs (yᵢ) de valeurs (y_{i,j}), chaque valeur (y_{i,j}) étant un nombre réel flottant et étant représentable par le calculateur (1) selon un format de représentation prédéfini dans lequel les valeurs représentables selon ce format sont comprises entre une valeur minimale et une valeur maximale représentables,
dans lequel, pour l'agrégation des distributions initiales, le calculateur (1) est configuré pour mettre en œuvre, itérativement :
- (230) un regroupement de distributions pour former une pluralité de sous-ensembles de distributions, et
- (240) des opérations de produits, terme à terme, sur les sous-ensembles de distributions, lesdits produits résultant en au moins une distribution intermédiaire, suivie par (250) une opération de normalisation de chaque distribution intermédiaire,
jusqu'à (270) obtenir la distribution agrégée,
dans lequel chaque regroupement (230) de distributions est mis en œuvre de sorte que les opérations de produits sur les sous-ensembles de distributions conduisent à des valeurs résultantes strictement supérieures à la valeur minimale représentable.

2. Calculateur (1) selon la revendication 1, configuré en outre pour mettre en œuvre :
- (220) une comparaison des valeurs (y_{i,j}) des vecteurs (yᵢ) de la pluralité de distributions initiales les unes avec les autres,
de sorte que les sous-ensembles de distributions sont formés en fonction au moins de ladite comparaison (220).

3. Calculateur (1) selon l'une des revendications précédentes, configuré pour agréger la pluralité de distributions initiales sous la forme d'un arbre de réduction, ledit arbre de réduction comprenant des nœuds correspondant aux opérations de produits (240) suivis par l'opération de normalisation (250), et des branches correspondant à la formation (230) de sous-ensembles de distributions.

4. Calculateur (1) selon l'une des revendications précédentes, configuré pour former les sous-ensembles de distributions de tailles maximales pour lesquels les opérations de produits (240) conduisent à des valeurs résultantes strictement supérieures à la valeur minimale représentable, de sorte que le nombre d'opérations de normalisation (250) permettant d'obtenir la distribution agrégée soit minimal.

5. Calculateur (1) selon l'une des revendications précédentes, dans lequel le format de représentation prédéfini appartient à un élément parmi au moins : le format demi-précision d'encodage en 16 bits, le format simple précision d'encodage en 32 bits, le format double précision d'encodage en 64 bits et le format quadruple précision d'encodage en 128 bits.

6. Calculateur (1) selon l'une des revendications précédentes, configuré pour agréger une pluralité de distributions initiales correspondant à des vecteurs (yᵢ) de valeurs (y_{i,j}) comprises entre 0 et 1.

7. Calculateur (1) selon l'une des revendications précédentes, configuré pour agréger une pluralité de distributions initiales correspondant à des vecteurs de probabilités (yᵢ) de valeurs associées à une même variable (X) observée, en une distribution agrégée correspondant à une estimation d'un vecteur de probabilités (*x̃*) des valeurs de ladite variable (X).

8. Décodeur comprenant un calculateur (1) selon l'une des revendications 1 à 6 configuré pour agréger une pluralité de transmissions relatives à des symboles d'une trame CCSK-CP-OFDM en une distribution agrégée des valeurs estimées relatives à chaque symbole transmis.

9. Dispositif de décodage (1') d'un code correcteur d'erreurs comprenant un calculateur (1) selon l'une des revendications 1 à 6 pour agréger une pluralité de distributions ((y₁, y₂, y₃) relatives à des bits d'information (*x̃*) d'un message (X) transmis en une distribution agrégée (*x̃*) des valeurs estimées relatives à chaque bit d'information (x) transmis.

10. Procédé (200) d'agrégation d'une pluralité de distributions initiales de valeurs en une distributions agrégée mis en œuvre par un calculateur (1), lesdites distributions initiales étant associées à des vecteurs (yᵢ) de valeurs (y_{i,j}), chaque valeur (y_{i,j}) étant un nombre réel flottant et étant représentable par le calculateur (1) selon un format de représentation prédéfini dans lequel les valeurs représentables selon ce format sont comprises entre une valeur minimale et une valeur maximale représentables,
le procédé (200) comprenant les étapes itératives suivantes :
- (S230) un regroupement de distributions pour former une pluralité de sous-ensembles de distributions, et
- (240) des opérations de produits, terme à terme, sur les sous-ensembles de distributions, lesdits produits résultant en au moins une distribution intermédiaire, suivie par (250) une opération de normalisation de chaque distribution intermédiaire,
jusqu'à (270) obtenir la distribution agrégée,
dans lequel chaque regroupement (230) de distributions est mis en œuvre de sorte que les opérations de produits sur les sous-ensembles de distributions conduisent à des valeurs résultantes strictement supérieures à la valeur minimale représentable.

11. Programme informatique comportant des instructions pour la mise en œuvre du procédé (200) selon la revendication précédente lorsque ce programme est exécuté par un processeur (11).

12. Support d'enregistrement non transitoire lisible par un ordinateur sur lequel est enregistré un programme pour la mise en œuvre du procédé (200) selon la revendication 10 lorsque ce programme est exécuté par un processeur (11).

## Patentansprüche

1. Rechner (1), der dazu ausgelegt ist, eine Mehrzahl von Ausgangsverteilungen zu einer aggregierten Verteilung zu aggregieren, wobei die Ausgangsverteilungen Vektoren (yi) von Werten (y_{i,j}) zugeordnet sind, wobei jeder Wert (y_{i,j}) eine reelle Gleitkommazahl ist und von dem Rechner (1) gemäß einem vordefinierten Darstellungsformat dargestellt werden kann, bei dem die gemäß diesem Format darstellbaren Werte zwischen einem darstellbaren minimalen Wert und einem maximalen darstellbaren Wert liegen,
wobei der Rechner (1) zwecks Aggregation der Ausgangsverteilungen dazu ausgelegt ist, Folgendes iterativ durchzuführen:
- (230) eine Gruppierung von Verteilungen, um eine Mehrzahl von Teilmengen von Verteilungen zu bilden, und
- (240) elementweise Produktoperationen an den Teilmengen von Verteilungen, wobei die Produkte in mindestens einer Zwischenverteilung resultieren, gefolgt von (250) einer Operation zur Normalisierung jeder Zwischenverteilung;
bis (270) die aggregierte Verteilung erhalten wird,
wobei jede Gruppierung (230) von Verteilungen so durchgeführt wird, dass die Produktoperationen an den Teilmengen von Verteilungen zu resultierenden Werten führen, die strikt größer als der darstellbare minimale Wert sind.

2. Rechner (1) nach Anspruch 1, der ferner dazu ausgelegt ist, Folgendes durchzuführen:
- (220) einen Vergleich der Werte (y_{i,j}) der Vektoren (yᵢ) der Mehrzahl von Ausgangsverteilungen miteinander, so dass die Teilmengen von Verteilungen in Abhängigkeit von mindestens dem Vergleich (220) gebildet werden.

3. Rechner (1) nach einem der vorhergehenden Ansprüche, der dazu ausgelegt ist, die Mehrzahl von Ausgangsverteilungen in Form eines Reduktionsbaums zu aggregieren, wobei der Reduktionsbaum Knoten umfasst, die den Produktoperationen (240) gefolgt von der Normalisierungsoperation (250) entsprechen, und Kanten, die der Bildung (230) von Teilmengen von Verteilungen entsprechen.

4. Rechner (1) nach einem der vorhergehenden Ansprüche, der dazu ausgelegt ist, die Teilmengen von Verteilungen mit maximalen Größen zu bilden, bei denen die Produktoperationen (240) zu resultierenden Werten führen, die strikt größer als der darstellbare minimale Wert sind, so dass die Anzahl der Normierungsoperationen (250), die es ermöglicht, die aggregierte Verteilung zu erhalten, minimal ist.

5. Rechner (1) nach einem der vorhergehenden Ansprüche, wobei das vordefinierte Darstellungsformat zu einem Element von mindestens Folgenden gehört: Format mit halber Genauigkeit zur 16-Bit-Codierung, Format mit einfacher Genauigkeit zur 32-Bit-Codierung, Format mit doppelter Genauigkeit zur 64-Bit-Codierung und Format mit vierfacher Genauigkeit zur 128-Bit-Codierung.

6. Rechner (1) nach einem der vorhergehenden Ansprüche, der dazu ausgelegt ist, eine Mehrzahl von Ausgangsverteilungen zu aggregieren, die Vektoren (yi) von Werten (y_{i,j}) zwischen 0 und 1 entsprechen.

7. Rechner (1) nach einem der vorhergehenden Ansprüche, der dazu ausgelegt ist, eine Mehrzahl von Ausgangsverteilungen, die Wahrscheinlichkeitsvektoren (Yi) von Werten entsprechen, die einer selben beobachteten Variable (X) zugeordnet sind, zu einer aggregierten Verteilung zu aggregieren, die einer Schätzung eines Wahrscheinlichkeitsvektors (*x̃*) der Werte der Variablen (X) entspricht.

8. Decodierer, der einen Rechner (1) nach einem der Ansprüche 1 bis 6 umfasst, der dazu ausgelegt ist, eine Mehrzahl von Übertragungen bezüglich von Symbolen eines CCSK-CP-OFDM-Rahmens zu einer aggregierten Verteilung der Schätzwerte bezüglich jedes übertragenen Symbols zu aggregieren.

9. Vorrichtung (1') zum Decodieren eines Fehlerkorrekturcodes, umfassend einen Rechner (1) nach einem der Ansprüche 1 bis 6 zum Aggregieren einer Mehrzahl von Verteilungen (y₁, y₂, y₃) bezüglich von Informationsbits (*x̃*) einer übertragenen Nachricht (X) zu einer aggregierten Verteilung (*x̃*) der Schätzwerte bezüglich jedes übertragenen Informationsbits (x).

10. Verfahren (200) zum Aggregieren einer Mehrzahl von Ausgangsverteilungen von Werten zu einer aggregierten Verteilung, das von einem Rechner (1) durchgeführt wird, wobei die Ausgangsverteilungen Vektoren (yᵢ) von Werten (y_{i,j}) zugeordnet sind, wobei jeder Wert (y_{i,j}) eine reelle Gleitkommazahl ist und von dem Rechner (1) gemäß einem vordefinierten Darstellungsformat dargestellt werden kann, bei dem die gemäß diesem Format darstellbaren Werte zwischen einem darstellbaren minimalen Wert und einem maximalen darstellbaren Wert liegen,
wobei das Verfahren (200) die folgenden iterativen Schritte umfasst:
- (S230) eine Gruppierung von Verteilungen, um eine Mehrzahl von Teilmengen von Verteilungen zu bilden, und
- (240) elementweise Produktoperationen an den Teilmengen von Verteilungen, wobei die Produkte in mindestens einer Zwischenverteilung resultieren, gefolgt von (250) einer Operation zur Normalisierung jeder Zwischenverteilung;
bis (270) die aggregierte Verteilung erhalten wird,
wobei jede Gruppierung (230) von Verteilungen so durchgeführt wird, dass die Produktoperationen an den Teilmengen von Verteilungen zu resultierenden Werten führen, die strikt größer als der darstellbare minimale Wert sind.

11. Computerprogramm, das Anweisungen umfasst, die bei der Ausführung dieses Programms durch einen Prozessor (11) das Verfahren (200) nach dem vorhergehenden Anspruch durchführen.

12. Computerlesbares nichtflüchtiges Speichermedium, auf dem ein Programm zur Durchführung des Verfahrens (200) nach Anspruch 10, wenn dieses Programm von einem Prozessor (11) ausgeführt wird, gespeichert ist.

## Claims

1. Computer (1) configured to aggregate a plurality of initial distributions into an aggregated distribution, said initial distributions being associated with vectors (yi) of values (y_{i,j}), each value (y_{i,j}) being a floating real number and being representable by the computer (1) in a predefined representation format in which the values representable in this format are comprised between a minimum and a maximum representable value,
wherein, to aggregate the initial distributions, the computer (1) is configured to iteratively apply:
- (230) clustering to distributions to form a plurality of subsets of distributions, and
- (240) product operations, term by term, to the subsets of distributions, said products resulting in at least one intermediate distribution, and then (250) a normalization operation to each intermediate distribution,
until the aggregate distribution is obtained (270),
and wherein each application of clustering (230) to distributions is carried out such that the product operations applied to the subsets of distributions lead to resulting values strictly greater than the minimum representable value.

2. Computer (1) according to Claim 1, further configured to apply:
- (220) a comparison of the values (y_{i,j}) of the vectors (yi) of the plurality of initial distributions with one another,
such that the subsets of distributions are formed depending on at least said comparison (220).

3. Computer (1) according to any of the preceding claims, configured to aggregate the plurality of initial distributions into a reduction tree, said reduction tree comprising nodes corresponding to the product operations (240) followed by the normalization operation (250), and branches corresponding to the formation (230) of distribution subsets.

4. Computer (1) according to any of the preceding claims, configured to form the largest subsets of distributions for which the product operations (240) lead to resultant values strictly greater than the minimum representable value, such that the number of normalization operations (250) allowing the aggregated distribution to be obtained is minimal.

5. Computer (1) according to any of the preceding claims, wherein the predefined representation format is at least one of: 16-bit half-precision encoding format, 32-bit single-precision encoding format, 64-bit double-precision encoding format, and 128-bit quadruple-precision encoding format.

6. Computer (1) according to any of the preceding claims, configured to aggregate a plurality of initial distributions corresponding to vectors (yi) of values (y_{i,j}) comprised between 0 and 1.

7. Computer (1) according to any of the preceding claims, configured to aggregate a plurality of initial distributions corresponding to probability vectors (yi) of values associated with the same observed variable (X), into an aggregated distribution corresponding to an estimate (*x̃*) of a vector of probabilities of the values of said variable (X).

8. Decoder comprising a computer (1) according to any of Claims 1 to 6 configured to aggregate a plurality of transmissions relating to symbols of a CCSK-CP-OFDM frame into an aggregated distribution of estimated values relating to each transmitted symbol.

9. Device (1') for decoding an error correcting code comprising a computer (1) according to any of Claims 1 to 6 with a view to aggregating a plurality of distributions (y₁, y₂, y₃) relating to information bits (*x̃*) of a transmitted message (X) into an aggregated distribution (*x̃*) of the estimated values relating to each transmitted information bit (x).

10. Method (200) for aggregating a plurality of initial distributions of values into an aggregated distribution implemented by a computer (1), said initial distributions being associated with vectors (yᵢ) of values (y_{i,j}), each value (y_{i,j}) being a floating real number and being representable by the computer (1) in a predefined representation format in which the values representable in this format are comprised between a minimum and a maximum representable value,
the method (200) comprising the following iterative steps:
- (S230) clustering distributions to form a plurality of subsets of distributions, and
- (240) applying product operations, term by term, to the subsets of distributions, said products resulting in at least one intermediate distribution, and then (250) applying a normalization operation to each intermediate distribution,
until the aggregate distribution is obtained (270),
and wherein each application of clustering (230) to distributions is carried out such that the product operations applied to the subsets of distributions lead to resulting values strictly greater than the minimum representable value.

11. Computer program comprising instructions for implementing the method (200) according to the preceding claim when this program is executed by a processor (11).

12. Non-transient computer-readable recording medium on which is recorded a program for implementing the method (200) according to Claim 10 when this program is executed by a processor (11).
